# EUROPÄISCHE PATENTSCHRIFT

(11) **EP 1 912 311 B1**
(45) Veröffentlichungstag und Bekanntmachung des Hinweises auf die Patenterteilung: **10.02.2010**
(21) Anmeldenummer: 07114774.8
(22) Anmeldetag: 22.08.2007
(51) Int. Cl.: H02K 5/24

(54) **Anordnung zur schwingungsisolierenden Lagerung eines Elektromotors**
Assembly for the vibration free fixation of an electrical motor bearing
Dispositif d'isolation de vibrations pour pallier d'un moteur électrique

(30) Priorität: 13.10.2006 DE 202006015889 U
(43) Veröffentlichungstag der Anmeldung: 16.04.2008
(73) Patentinhaber: ebm-papst Mulfingen GmbH & Co. KG, 74673 Mulfingen (DE)
(72) Erfinder: Baer, Martin, 74673 Mulfingen (DE); Schöne, Jürgen, 97980 Bad Mergentheim (DE); Streng, Gunter, 74575 Schrozberg (DE)
(74) Vertreter: Patentanwälte Dr. Solf & Zapf

(56) Entgegenhaltungen:
- EP-A- 1 107 432
- BE-A- 398 985
- DE-A1- 4 334 202
- DE-U1- 20 216 701
- DE-U1- 29 900 923
- JP-A- 62 260 538
- US-A- 4 063 060

## Beschreibung

Die vorliegende Erfindung betrifft eine Anordnung zur schwingungsisolierenden Lagerung eines Elektromotors an einem Halteteil über mindestens ein umfangsgemäß zwischen Elektromotor und Halteteil angeordnetes Isolationselementwobei das Isolationselement eine erste Eigenfrequenz der Drehschwingung des Gesamtsystems bewirkt, die kleiner, insbesondere deutlich kleiner ist, als die erste Anregungsfrequenz des Elektromotors.

Eine derartige Anordnung ist beispielsweise aus dem deutschen Gebrauchsmuster DE 299 00 923 bekannt. Hierbei ist das jeweilige Isolationselement derart ausgebildet, dass es insbesondere in Umfangsrichtung elastisch ausgebildet ist und schwingungsisolierend wirkt.

Aus der US Patentschrift US 4,063,060 ist ebenfalls ein Isolationselement zur schwingungsisolierenden Lagerung eines Motors beschrieben, wobei das Isolationselement eine erste Eigenfrequenz der Drehschwingung des Gesamtsystems bewirkt, die kleiner ist als die Hälfte der ersten Anregungsfrequenz des Elektromotors. Das Isolationselement besteht hier aus drei über dem Außenumfang des Elektromotors verteilten torsions-flexiblen Haltearmen.

Aus der DE 202 16 701 U1 ist ein U-förmiges Federelement zur schwingungsisolierenden Halterung eines Elektromotors bekannt, bestehend aus einem Federwerkstoff, mit einem streifenförmigen, elastisch verformbaren Federabschnitt und zwei Befestigungsabschnitten zur Halteverbindung einerseits mit dem Elektromotor und andererseits mit einem Halteteil.

Derartige Ausbildungen sind jedoch für Motoren mit relativ hohem Gewicht, beispielsweise größer 5 kg nicht geeignet, da derartig elastische Elemente an dauerbelasteten Stellen zum Kriechen neigen. Weiterhin hat sich herausgestellt, dass bei Ventilatoren, die mit Drehstrom- oder Einphasen-Kondensatormotoren mit einer Phasenanschnittsteuerung betrieben werden, motorinduzierte Zusatzgeräusche auftreten. Diese können je nach strömungstechnischem Betriebspunkt, Motordrehzahl, Belastung und mechanischer Auslegung von Motor oder Ventilator und weiteren anwendungsbezogenen Motorauslegungsdetails große Werte annehmen und das Lüftergeräusch vollständig übertreffen.

Der vorliegenden Erfindung liegt die Aufgabe zu Grunde, ein Isolationselement zu schaffen, das insbesondere für den Einsatz bei Ventilatoren mit einer großen Masse, beispielsweise größer 5 kg geeignet ist, und das die vom Motor ausgehenden Schwingungen isoliert und damit das abgestrahlte motorinduzierte Geräusch deutlich reduziert.

Erfindungsgemäß wird dies dadurch erreicht, dass die Isolationselemente einen ebenen Befestigungsabschnitt für das Halteteil aufweisen, an dessen beiden Enden jeweils etwa gleichgerichtet rechtwinklig abgebogene Stützschenkel ausgebildet sind, an deren freien Enden etwa rechtwinklig entgegengerichtet abstehende Befestigungslaschen für den Elektromotor angeformt sind, und der Befestigungsabschnitt und die Befestigungslaschen kreisbogenförmige Außen- und Innenkanten aufweisen, die konzentrisch zur Achse des kreisförmigen Statorflansches verlaufen. Zweckmäßigerweise sind die erfindungsgemäßen Isolationselemente zwischen der Anregungsseite, d. h. dem Statorpaket bzw. dem Motorflansch o. ä., und der Anwendungsseite, d. h. dem Schutzgitter, einem Montageblech oder einem Kundengerät o. ä., angeordnet.

Weitere vorteilhafte Ausführungen der Erfindung sind in den Unteransprüchen enthalten.

An Hand des in den beiliegenden Zeichnungen dargestellten Ausführungsbeispiels wird die Erfindung näher erläutert. Es zeigen:
- Fig. 1: eine Seitenansicht eines Axialventilators, zum Teil geschnitten, mit einer erfindungsgemäßen Anordnung zur schwingungsisolierenden Lagerung eines Elektromotors,
- Fig. 2: eine Ansicht eines Statorflansches des Motors eines Axialventilators gemäß Fig. 1 mit erfindungsgemäßen Isolationselementen.

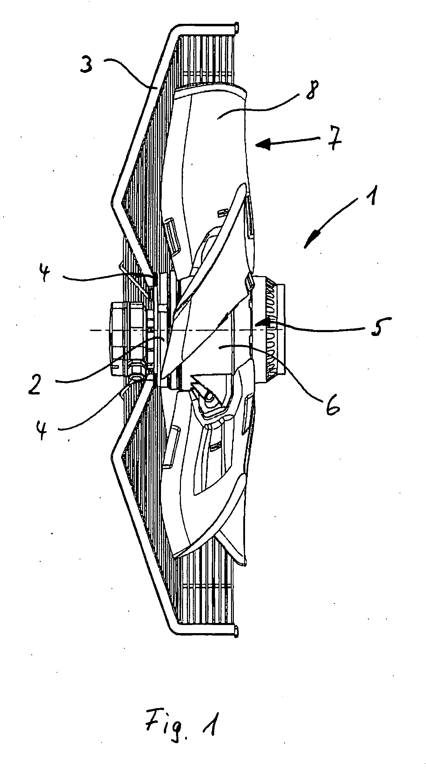

Wie sich aus Fig. 1 ergibt, besteht ein Axialventilator 1 aus einem Elektromotor 5, bestehend aus einem Stator und einem den Stator umgebenden Rotor 6, der die Nabe eines Lüfterrades 7 bildet, an der die einzelnen Lüfterschaufeln 8 befestigt sind.

Zentrisch durch den Elektromotor 5 verläuft eine Motorachse, die über nicht dargestellte Lagerelemente innerhalb eines Lagertragrohres gelagert ist. Das Lagertragrohr durchgreift den Stator und den Rotor 6 und geht an der offenen Stirnseite des Rotors in ein scheibenförmiges Befestigungselement, den so genannten Statorflansch 2 über. Über diesen Statorflansch 2 wird der Ventilator 1 an einem Schutzgitter 3, oder in hier nicht dargestellten Ausführungen z. B. an einem Montageblech oder Kundengerät befestigt. Im dargestellten Ausführungsbeispiel in Verbindung mit einem Schutzgitter, ist das Schutzgitter 3 kreisförmig ausgebildet und im Wesentlichen aus Stahldraht gefertigt. Es besteht aus radialen Speichenelementen und damit verbundenen, im Wesentlichen kreisförmigen Gitterdrähten. Das Schutzgitter 3 hat dabei neben seiner Aufgabe als Befestigungselement des Ventilators am Einsatzort, auch den Schutz vor Berührungen des Lüfterrades 7 zu gewährleisten.

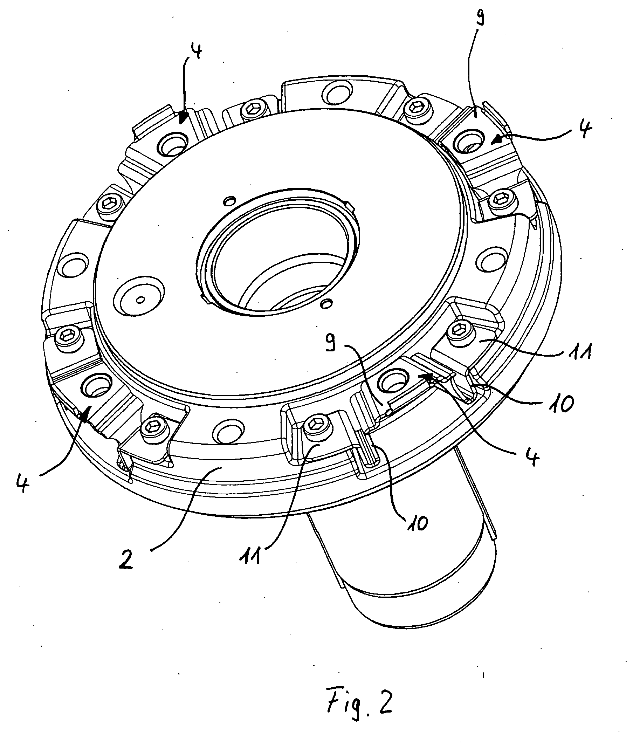

Der Elektromotor 5 mit dem Lüfterrad 7 und dem Schutzgitter 3 bildet ein Schwingungssystem, das durch den Elektromotor 5 angeregt wird. Erfindungsgemäß ist nun vorgesehen, dass zwischen dem Elektromotor 5, insbesondere dessen Statorflansch 2, siehe Fig. 1, und dem Schutzgitter 3, das in Fig. 2 nicht dargestellt ist, Isolationselemente 4 angeordnet sind. Diese Isolationselemente 4 sind erfindungsgemäß derart ausgelegt, dass sie eine erste Eigenfrequenz der Drehschwingung um die Drehachse des Gesamtsystems bewirken, die kleiner, insbesondere deutlich kleiner ist, als die erste zu isolierende Anregungsfrequenz des Elektromotors 5. Ist der Elektromotor 5 als Drehstrommotor ausgelegt, der mit einer Netzfrequenz von 50 Hz bzw. 60 Hz betrieben wird, so beträgt dessen erste Anregungsfrequenz bei Betrieb mit Phasenanschnittsteuerung 300 Hz bzw. 360 Hz. Handelt es sich um einen Elektromotor, der als Einphasen-Motor ausgebildet ist, und mit einer Frequenz von 50 Hz betrieben wird, so beträgt dessen erste Anregungsfrequenz im Wesentlichen 100 Hz. Die erfindungsgemäßen Isolationselemente 4, die umfangsgemäß verteilt zwischen Elektromotor 5 und Schutzgitter 3 angeordnet sind, im vorliegenden Ausführungsbeispiel handelt es sich um vier äquidistant am Umfang verteilte Isolationselemente 4, bestehen aus einem elastischen Material. Dabei sind diese Elemente derart ausgebildet, dass sie in Umfangsrichtung, d. h. in und gegen die Drehrichtung, elastisch und in allen anderen Belastungsrichtungen steif ausgebildet sind. Erfindungsgemäß wird durch die gewählte Konstruktion und das verwendete Material der Isolationselemente 4 ein Elementaufbau geschaffen, der insgesamt elastisch ist. Vorzugsweise bestehen die erfindungsgemäßen Isolationselemente 4 aus Federstahl oder Elastomerwerkstoff. Die Isolationselemente 4 sind im gezeigten Ausführungsbeispiel wie aus Fig. 2 ersichtlich derart ausgebildet, dass sie einen ebenen Befestigungsabschnitt 9 besitzen, an dem das Halteteil, d. h. das Schutzgitter 3 befestigt wird. An dessen beiden Enden sind gleichgerichtet etwa rechtwinklig abgebogene Stützschenkel 10 ausgebildet, die z. B. als etwa U-förmig gebogene Doppelschenkel geformt sind. An den freien Enden der Stützschenkel 10 sind rechtwinklig abstehende entgegen gerichtete Befestigungslaschen 11 zur Befestigung an dem Statorflansch 2 des Motors 5 angeformt. Diese verlaufen z. B. zwischen dem Befestigungsabschnitt 9 und dem U-Bogenbereich des Doppelschenkels. Zur Anpassung an die kreisförmige Umfangskontur des Statorflansches 2 sind der Befestigungsabschnitt 9 und die Befestigungslaschen 11 kreisbogenförmig ausgebildet, so dass deren Außen- und Innenkanten auf zur Achse des Statorflansches 2 konzentrischen Kreisen verlaufen.

Im dargestellten Ausführungsbeispiel ist es insbesondere über die Ausgestaltung der Stützschenkel 10 möglich, die erforderliche Elastizität in Umfangsrichtung einzustellen. Dies kann durch die Breite und Dicke der Stützschenkel 10 erfolgen. Auch können die Stützschenkel 10 eine bestimmte Konturierung hierzu aufweisen.

Die Vorteile der erfindungsgemäßen Ausbildung der Isolationselemente 4 liegen darin, dass diese für Motoren mit relativ großem Gewicht geeignet sind, ihre Einbaulage unabhängig erfolgen kann und konstruktionsbedingt keine Kriechproblematik zu berücksichtigen ist, da an dauerbelasteten Stellen nur kriechfeste Materialien eingesetzt werden. Zudem können sie konstruktiv einfach ausgestaltet sein und stellen daher eine kostengünstige Lösung dar.

Neben der im Ausführungsbeispiel gezeigten Anordnung der erfindungsgemäßen Isolationselemente 4 zwischen dem Schutzgitter 3 und dem Statorflansch 2, können diese Isolationselemente auch im Stator teilweise integriert sein. Auch kann eine integrierte Lösung im Schutzgitter 3 selbst vorgesehen sein, zum Beispiel als Element der Schutzgitterstreben. Auch ist es möglich, eine integrierte Lösung im Motor selber vorzusehen, wobei dann erfindungsgemäß Isolationselemente 4 zwischen dem Statorflansch und dem Statorpaket oder zwischen Teilen des Statorflansches angeordnet sein können.

Bei einem Drehstrommotor konnte die störende 300 Hz-Anregung sowie Vielfache davon durch die erfindungsgemäßen Isolationselemente 4, wie im Ausführungsbeispiel gezeigt, deutlich reduziert werden, wobei der Schalldruckpegel eine drehzahlabhängige Verbesserung über einen weiten Drehzahlbereich von bis zu 15 dB aufwies.

## Patentansprüche

1. Anordnung zur schwingungsisolierenden Lagerung eines Elektromotors (5) an einem Halteteil über mindestens ein umfangsgemäß zwischen Elektromotor (5) und Halteteil (3) angeordnetes Isolationselement (4), wobei das Isolationselement (4) eine erste Eigenfrequenz der Drehschwingung des Gesamtsystems bewirkt, die kleiner, insbesondere deutlich kleiner ist, als die erste Anregungsfrequenz des Elektromotors (5),
**dadurch gekennzeichnet, dass** die Isolationselemente (4) einen ebenen Befestigungsabschnitt (9) für das Halteteil (3) aufweisen, an dessen beiden Enden jeweils etwa gleichgerichtet rechtwinklig abgebogene Stützschenkel (10) ausgebildet sind, an deren freien Enden etwa rechtwinklig entgegengerichtet abstehende Befestigungslaschen (11) für den Elektromotor (5) angeformt sind, und der Befestigungsabschnitt (9) und die Befestigungslaschen (11) kreisbogenförmige Außen- und Innenkanten aufweisen, die konzentrisch zur Achse des kreisförmigen Statorflansches (2) verlaufen.

2. Anordnung nach Anspruch 1,
**dadurch gekennzeichnet, dass** der Elektromotor (5) ein Drehstrommotor ist, der mit einer Netzfrequenz von 50 Hz bzw. 60 Hz betrieben wird, dessen erste Anregungsfrequenz bei Betrieb mit Phasenanschnittsteuerung 300 Hz bzw. 360 Hz beträgt.

3. Anordnung nach Anspruch 1,
**dadurch gekennzeichnet, dass** der Elektromotor (5) ein Einphasen-Motor ist, der mit einer Netzfrequenz von 50 Hz betrieben wird und dessen erste Anregungsfrequenz im Wesentlichen 100 Hz beträgt.

4. Anordnung nach einem der Ansprüche 1 bis 3,
**dadurch gekennzeichnet, dass** die Isolationselemente (4) aus einem elastischen Material bestehen.

5. Anordnung nach einem der Ansprüche 1 bis 4,
**dadurch gekennzeichnet, dass** dieKonstruktionunddasMaterial der Isolationselemente (4) derart abgestimmt sind, dass diese elastisch sind, wobei die Elastizität in und entgegen der Drehrichtung des Elektromotors (5) gegeben ist.

6. Anordnung nach einem der Ansprüche 1 bis 5,
**dadurch gekennzeichnet, dass** die Isolationselemente(4) aus Federstahl oder aus einem Elastomerelement bestehen.

7. Anordnung nach einem oder mehreren der Ansprüche 1 bis 6,
**dadurch gekennzeichnet, dass** die Isolationselemente (4) zwischen Statorbuchse (2) und Schutzgitter (3) angeordnet sind.

8. Anordnung nach Anspruch 7,
**dadurch gekennzeichnet, dass** die Isolationselemente (4) teilweise im Stator integriert sind.

9. Anordnung nach einem der Ansprüche 1 bis 6,
**dadurch gekennzeichnet, dass** die Isolationselemente (4) im Schutzgitter (3) integriert sind.

10. Anordnung nach einem der Ansprüche 1 bis 6,
**dadurch gekennzeichnet, dass** die Isolationselemente (4) zwischen Statorbuchse (2) und Statorpaket oder zwischen Teilen des Statorflansches (2) des Elektromotors (5) angeordnet sind.

## Claims

1. An arrangement for the vibration-damping mounting of an electric motor (5) on a retaining part by way of at least one insulation element (4) arranged on the periphery between the electric motor (5) and the retaining part (3), wherein the insulation element (4) produces a first natural frequency of the rotary vibration of the overall system, which natural frequency is smaller, and in particular significantly smaller, than the first excitation frequency of the electric motor (5), **characterized in that** the insulation elements (4) have a flat fastening portion (9) for the retaining part (3), at the two ends of which supporting arms (10) are formed in each case which are bent at a right angle substantially in the same direction and at the free ends of which fastening plates (11) for the electric motor (5) are integrally formed which project substantially at a right angle in opposite directions, and the fastening portion (9) and the fastening plates (11) have arcuate external and internal edges which extend concentrically to the axis of the circular stator flange (2).

2. An arrangement according to Claim 1, **characterized in that** the electric motor (5) is a three-phase motor which is operated at a mains frequency of 50 Hz or 60 Hz respectively and the first excitation frequency of which amounts to 300 Hz and 360 Hz respectively when operated with phase-cutting control.

3. An arrangement according to Claim 1, **characterized in that** the electric motor (5) is a one-phase motor which is operated at a mains frequency of 50 Hz and the first excitation frequency of which amounts to substantially 100 Hz.

4. An arrangement according to any one of Claims 1 to 3, **characterized in that** the insulation elements (4) consist of a resilient material.

5. An arrangement according to any one of Claims 1 to 4, **characterized in that** the structure and the material of the insulation elements (4) are matched in such a way that the latter are resilient, wherein the resiliency is present in the direction of rotation of the electric motor (5) and in a direction opposed thereto.

6. An arrangement according to any one of Claims 1 to 5, **characterized in that** the insulation elements (4) consist of spring steel or of an elastomer element.

7. An arrangement according to any one of Claims 1 to 6, **characterized in that** the insulation elements (4) are arranged between a stator bush (2) and a safety grille (3).

8. An arrangement according to Claim 7, **characterized in that** the insulation elements (4) are incorporated in part in the stator.

9. An arrangement according to any one of Claims 1 to 6, **characterized in that** the insulation elements (4) are incorporated in the safety grille (3).

10. An arrangement according to any one of Claims 1 to 6, **characterized in that** the insulation elements (4) are arranged between the stator bush (2) and the stator stack or between parts of the stator flange (2) of the electric motor (5).

## Revendications

1. Dispositif pour le montage sans vibrations d'un moteur électrique (5) sur un support par l'intermédiaire d'au moins un élément d'isolation (4), agencé sur le pourtour entre le moteur électrique (5) et le support (3), l'élément d'isolation (4) induisant une première fréquence intrinsèque de la vibration torsionnelle de l'ensemble du système, laquelle est inférieure, en particulier nettement inférieure à la première fréquence d'excitation du moteur électrique (5),
**caractérisé en ce que** les éléments d'isolation (4) comportent une partie de fixation (9) plane pour le support (3), aux deux extrémités de laquelle sont réalisées respectivement des branches d'appui (10) pliées à angle droit dans le même sens, sur les extrémités libres desquelles sont formées des pattes de fixation (11) pour le moteur électrique (5), lesquelles s'avancent à peu près perpendiculairement en sens opposé, et la partie de fixation (9) et les pattes de fixation (11) comportent des bords extérieurs et intérieurs en forme d'arc de cercle qui s'étendent concentriquement à l'axe de la collerette (2) circulaire du stator.

2. Dispositif selon la revendication 1,
**caractérisé en ce que** le moteur électrique (5) est un moteur à courant triphasé, qui fonctionne avec une fréquence du réseau de 50 Hz ou 60 Hz, dont la première fréquence d'excitation en cours de service avec un réglage par redressement à l'entrée de phase est de 300 Hz ou 360 Hz.

3. Dispositif selon la revendication 1, **caractérisé en ce que** le moteur électrique (5) est moteur monophasé, qui fonctionne avec une fréquence du réseau de 50 Hz et dont la première fréquence d'excitation est sensiblement de l'ordre de 100 Hz.

4. Dispositif selon l'une quelconque des revendications 1 à 3,
**caractérisé en ce que** les éléments d'isolation (4) sont réalisés dans un matériau élastique.

5. Dispositif selon l'une quelconque des revendications 1 à 4,
**caractérisé en ce que** la construction et le matériau des éléments d'isolation (4) sont ajustés de telle sorte que ces derniers sont élastiques, l'élasticité étant donnée dans le sens de rotation et dans le sens opposé au sens de rotation du moteur électrique (5).

6. Dispositif selon l'une quelconque des revendications 1 à 5,
**caractérisé en ce que** les éléments d'isolation (4) sont réalisés en acier à ressort ou dans un élément élastomère.

7. Dispositif selon l'une quelconque des revendications 1 à 6,
**caractérisé en ce que** les éléments d'isolation (4) sont disposés entre la douille (2) du stator et la grille de protection (3).

8. Dispositif selon la revendication 7,
**caractérisé en ce que** les éléments d'isolation (4) sont intégrés partiellement dans le stator.

9. Dispositif selon l'une quelconque des revendications 1 à 6,
**caractérisé en ce que** les éléments d'isolation (4) sont intégrés dans la grille de protection (3).

10. Dispositif selon l'une quelconque des revendications 1 à 6,
**caractérisé en ce que** les éléments d'isolation (4) sont disposés entre la douille (2) du stator et le bloc formant stator ou entre des parties de la collerette (2) du stator du moteur électrique (5).
